Europäisches Patentamt

European Patent Office

Office européen des brevets

(11) Publication number: **0 335 482**
**A2**

## (12) EUROPEAN PATENT APPLICATION

(21) Application number: 89300967.0

(22) Date of filing: 01.02.89

(51) Int. Cl.⁴: **G06F 13/40 , G06F 15/16**

(30) Priority: 31.03.88 US 176495

(43) Date of publication of application:
04.10.89 Bulletin 89/40

(84) Designated Contracting States:
DE FR GB

(71) Applicant: **International Business Machines
Corporation
Old Orchard Road
Armonk, N.Y. 10504(US)**

(72) Inventor: **Gillett, John Brian
7 Meher Circle
Woodstock New York 12498(US)**

(74) Representative: **Grant, Iain Murray
IBM United Kingdom Limited Intellectual
Property Department Hursley Park
Winchester Hampshire SO21 2JN(GB)**

(54) High performance computer system.

(57) A high performance computer system with a plurality of processors and memory modules is arranged with the processor modules stacked one upon the other with first switch modules in a first stack and with the memory modules stacked one on the other with second switch modules in a second stack. The first and second stacks are arranged adjacent to each other with the first and second switch modules diagonally opposed. Interconnecting bus lines couple the processors to the memory modules through the first switch modules and couple the memory modules back to the processors through the second switch modules. The flow of data is in one direction through the memory modules and switches to reduce wire length, latency and skew while supporting fast cycle time and high bandwidth.

FIG. 1

## HIGH PERFORMANCE COMPUTER SYSTEM

This invention relates to computer systems and more particularly to a high performance computer system comprising a plurality of processors and a plurality of storage modules with these processors and modules coupled with minimum wire length, latency and skew while supporting very fast cycle times at high band width.

The trend in high performance computers is to use increasing number of processors operating cooperatively in common memory. The memory is broken into a number of independently addressable modules known as Basic Storage Modules (BSM). If there are 'n' processors, the number of Basic Storage Modules 'm' is likely to be greater than 'n'. Since the processors require equal access to the memories, there is some form of 'n x m' switch to select the appropriate path between the processor and the currently addressed memory for storing and retrieval of the data.

Parameters of importance to the performance of the system are processor cycle time, bandwidth, electrical path length, round trip delay, and timing skew.

The processor cycle time is minimised by placing the cycle determining path elements in the closest possible proximity to each other. The bandwidth between processor and memory is achieved by using the fastest possible data rate over a large number of parallel connections between the processors and switches, and the switches and the Basic Storage Modules. The electrical path length is the length between data latching points on different, but interconnected, functional units as measured in nanoseconds. The total round trip delay from a processor to a memory and back is known as the memory latency. This includes a number of electrical path lengths. The skew is the electrical path length differences due to variations in routing from one point to another. The area of memory is determined by the surface area required to contain the storage chips and the logic support chips. In a typical case of a Card-on-Board (COB) memory, all of the external interconnections are placed on one edge of the card. When the memory is accessed for data, a signal must travel from the input edge of the card to the far side, and return back to the original edge. In so doing, it has traversed the width of the card twice, with attendant delay, and the required data appears at the same edge from which it was requested, and therefore no closer to the final destination.

It is evident that with these conventional systems, there is significant skew or differences in electrical path due to accessing different parts of the memory or different memory chips in different sections of the memory, or from different processors.

The present invention provides a computer system including a plurality of processor modules, a plurality of memory modules, a request switch module and a response switch module, the inputs to and outputs from the switch modules and the memory modules being of respective opposite sides of the modules, the processor modules being physically mounted as a stack with the inputs thereto being all on one side of the stack and the outputs therefrom being all on one side - same or opposite side of the stack, the memory module being physically mounted as a stack with the input thereto,being all on one side of the stack and the output therefrom all being on the opposite side of the stack, the stacks being mounted with a respective axis substantially parallel to form a notional rectangle with the switch modules mounted at a pair of diagonally opposite corners of that notional rectangle, coupling means being provided which includes interconnecting parallel bus lines connecting the outputs of the processor modules to the request switch module input, the output of the request switch module to the memory module inputs, the memory module outputs to the input to the response switch module and the output from the response switch module to the processor module inputs, so that the signal flow from any processor through the request switch module, any memory module and the response switch module, back to the processor is in the same sense - on a unidirectional clockwise or anti-clockwise path - relative to the notional rectangle.

In accordance with the one embodiment of the present invention, the wire length, latency and skew are minimised while supporting a very fast cycle time and high band width by stacking processors with either a request or respond switch module stacked side by side with memory modules and respectively a respond or request switch module, with the respond and request switch modules diagonally opposed to each other and the processor diagonally opposed to the memory modules and wherein the inputs and outputs of the memory modules and the switches are on opposite edges of the modules wherein there are multiple wire coupling lines from the processor modules to the corresponding request switch module and from the request switch module to the memory modules and from the memory modules to the response switch module and from the response switch module back to the processors.

The present invention will be described further by way of example with reference to embodiments thereof as illustrated in the accompanying drawing, in which'

Figure 1 is a block diagram showing the layout of one form of computer system according to the present invention;

Figure 2 is a functional block diagram of the system of Figure 1;

Figure 3 illustrates a request switch module;

Figure 4 illustrates a memory module;

Figure 5 illustrates a respond switch module; and

Figure 6 is a layout diagram of an alternative embodiment of the present invention wherein the processors have a common input and output edge.

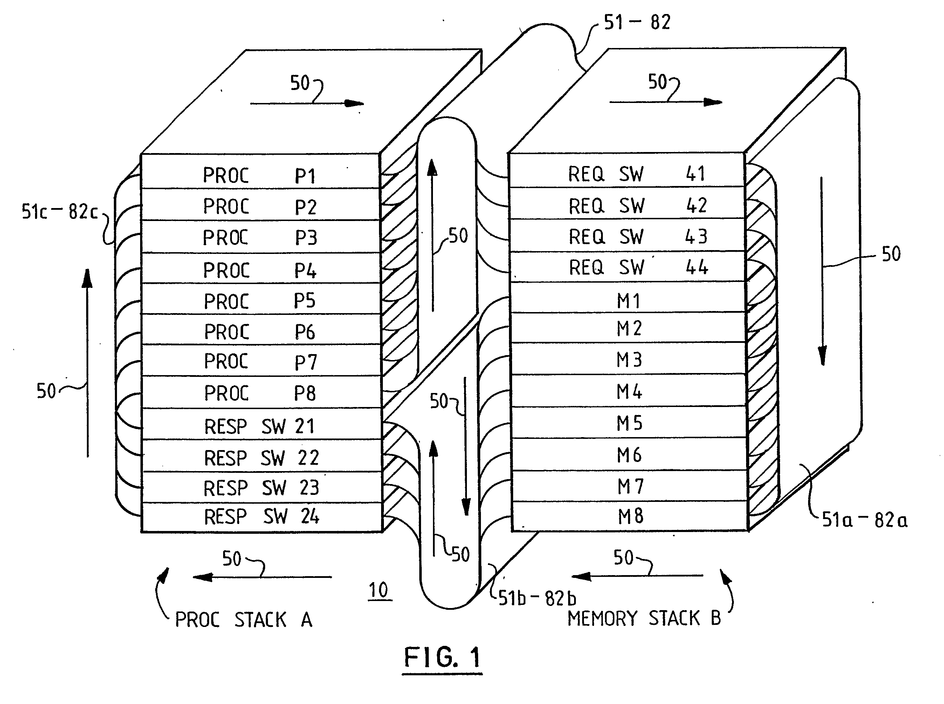

As shown in Figure 1, one embodiment of the present invention comprises eight processors P1-P8 that are connected to eight memory modules or Basic Storage Modules (BSM) M1 through M8 via four request switch modules 41-44, 32 flat ribbon like cables 51-82 and 32 flat ribbon cables 51a - 82a. Cables 51a - 82a may be conductors on a printed circuit board. The BSM M1 through M8 are coupled back to the processors P1-P8 through respond switch modules 21-24, 32 flat ribbon cables 51b - 82b and 32 flat ribbon cables 51c - 82c. Cables 51c - 82c may be conductors on a printed circuit board.

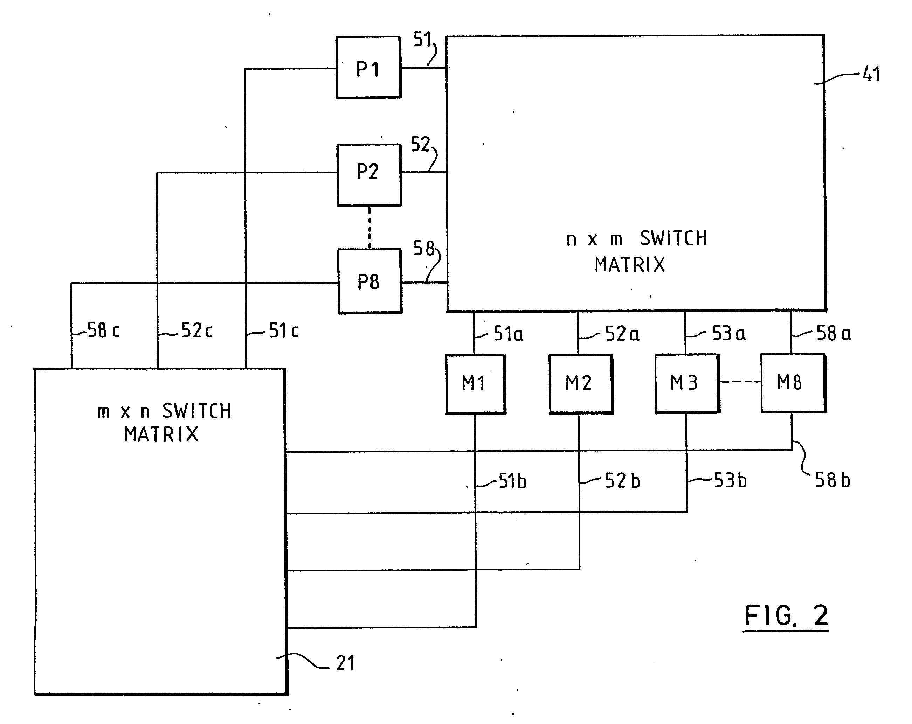

Each switch module comprises a matrix of n x m switches which for the embodiment is 8 x 8 matrix or 64 switches. Figure 2 shows a functional block diagram of a data slice through one request switch module 41 and one respond switch module 21. Similar data slices pass through request switch modules 42-44 and respond switch modules 22-24. The system may take this form in one embodiment of the present invention.

In the layout of the multiple switch module embodiment of Figure 1, the respond switch modules 21 through 24 are stacked one upon the other with the P1-P8 processors stacked above the respond switch modules 21 through 24 in processor stack A. In a stack B adjacent to the processor stack A, there is a stack of memory modules BSM M1-M8 with a stack of request switch modules 41-44 positioned on top of the BSM modules M1 through M8. These two stacks A and B are arranged side by side with the flat ribbon-like cables interconnecting the switch modules, the memory modules and the processors so the information always flows in one desired direction as shown by the arrows 50 in Figure 1. The general layout reduces the longest round trip to memory by an amount roughly equal to half the total wiring delay. This is accomplished by stacking the processors above or below one set of switch modules and the memory modules or Basic Storage Modules are either below or above the other set of switch modules where the Basic Storage Modules (BSM) M1-M8 are diagonally opposed to the processors P1-P8. The result of this is to reduce the total round trip wire length from approximately four times the height of the stack to only approximately twice the height of the stack. It can be seen that due to the unidirectional data flow, any penalty in the delay caused by a long path on one side of a unit stack is reduced by equal benefit in delay on the opposite side of the same stack. Further, all round trip delays are the same, independent of which processor or which BSM is used. Clocking signals may be routed along the same path as the data.

In accordance with the routing system described with four request switch modules 41-44, a data slice representing one quarter of a data word and address bits representing the designated BSM (one of M1 to M8) is sent by a ribbon-like cable 51, which comprises parallel wire conductors on flexible dielectric film, from the output of processor P1 for example to request switch module 41 as shown, for example, in Figures 1, 2 and 3. This data slice and the associated address bits plus seven other data slices and address bits from the other processors P2 to P8 are applied by the parallel conductors on flexible films or ribbon-like cables 52-58 to the input of the request switch module 41. The address bits associated with each data slice on each cable are decoded by the arbitrator 41a to indicate to which Basic Storage Module (BSM) M1 - M8 the data slice is to be applied. For example, if the data slice from processor P1 is to be applied to M1 the arbitrator detects that code and closes switch 70. If the decoder detects M4 it closes switch 71. If from processor P4 for memory module M2 switch 72 is closed. The arbitrator resolves conflicts for the same BSM by applying priorities and queuing conflicting requests. Similarly, switch modules 42 to 44 receive data slices and address bits from processors P1 through P8 via separate ribbon-like cables 59-82 (cables 59-66 to switch module 42, cables 67-74 to switch module 43, and cables 75-82 to switch module 44). The cables 51-82 extend between the near inner edges of the stacks A and B as shown in Figure 1. The switch modules 42-44 switch the respective data slices to the appropriate BSM M1 to M8. There are therefore eight parallel flexible film cables or ribbon cables (one from each processor P1-P8) coupled to each of the request switch modules 41-44.

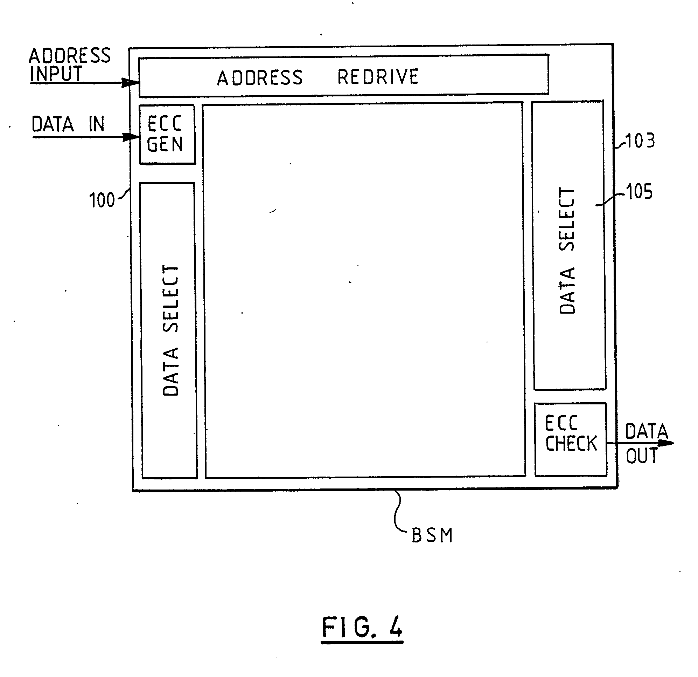

There are eight ribbon output cables from each switch module 41 - 44 with one for each BSM M1 to M8 or a total of 32 cables 51a to 82a. These cables 51a to 82a extend along the outboard surface of the memory stack B. This may be provided by a printed circuit board. The inputs from the processor enter at one input edge of the switch module and exit from an opposite edge. The address bits can also be part of the address for storage. In the example, the address bits are sent out along with the data slice to address the memory location within the BSM M1 to M8. The input to the BSM M1 to M8 with address enters at one edge 100 of the BSM and when retrieved exits from the opposite edge 103 as shown in Figure 4. The address bits are applied to the address input and the data is applied to data input and stored in the array at the address location. The four inputs from the four switches 41-44 are sent to the memory modules via the data select input.

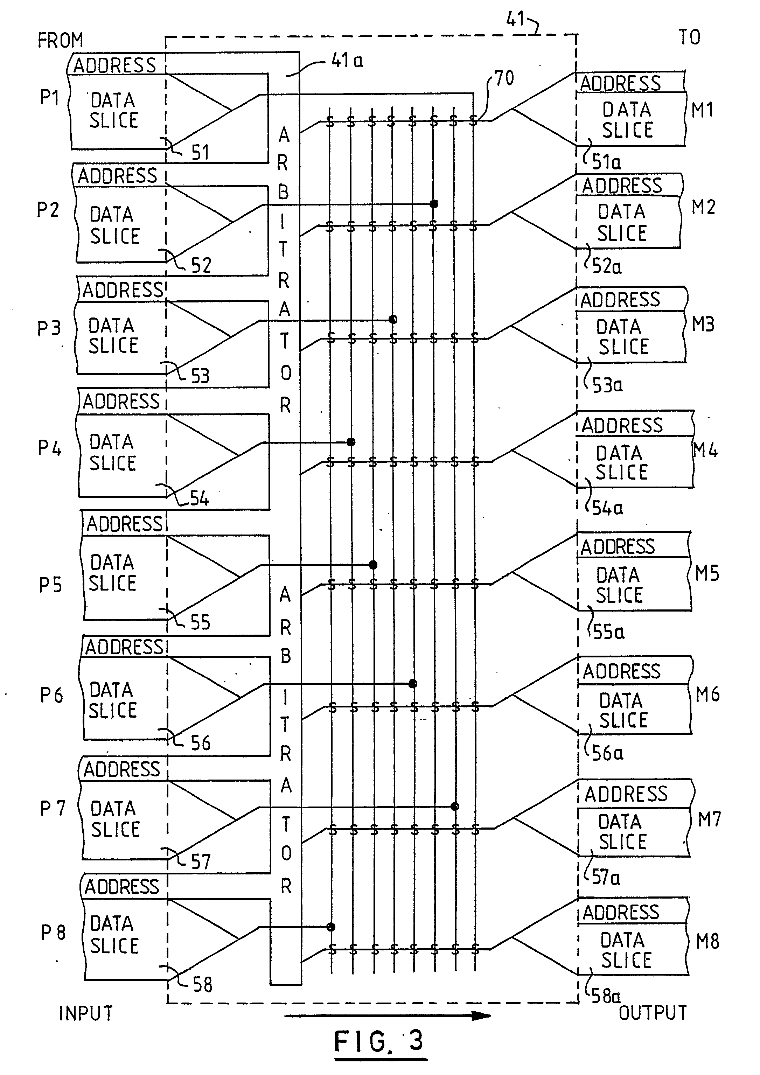

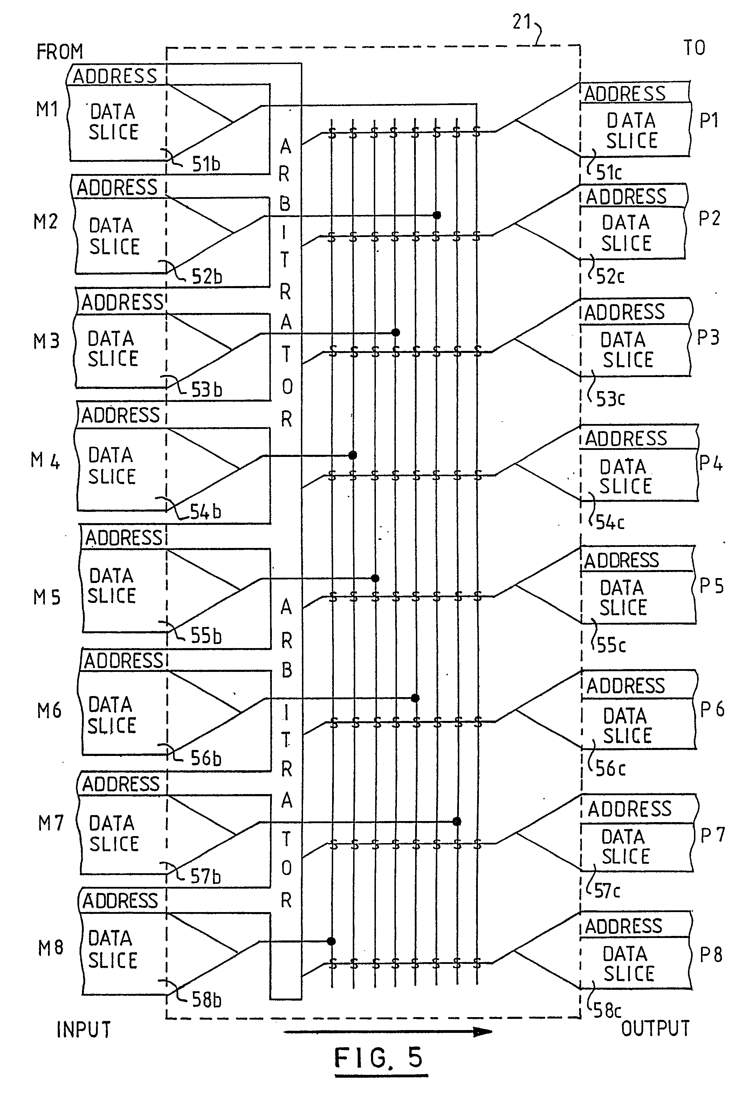

The data with the processor address bits when retrieved exits at the opposite edge 103 of the BSM M1 - M8. There are four groups of outputs from each of the Basic Storage Module M1 - M8 located at the opposite edge of the BSM. The outputs from the memory chips are selected by the data select 105. Each output group includes a data slice and processor address bits. These four outputs from each of module M1-M8 are coupled via separate ribbon cables 51b - 82b to respond switch modules 21 through 24 which are similar to request switch modules 41 - 44. The ribbon cables 51b - 82b from these Basic Storage Modules M1 - M8 are coupled between the inside edge of the memory stack B of M1 - M8 to the inside edge of the processor stack A at the respond switch modules 21 - 24. The BSM M1 - M8 are coupled to respond switch modules 21 via cables 51b - 58b. See Figure 5. In the same manner the connection is made between the memory modules M1 - M8 and respond switch modules 22-24 via cables 59b - 82b. All eight memory modules M1 - M8 are coupled to each switch module 21 to 24 with a processor address associated with each data slice. The respond switch modules as shown in Figure 5 are like those in Figure 3 except that the input with its data slice and address bits is identifying which processor to be coupled to rather than which memory.

The outputs from the respond switch modules 21-24 are coupled by ribbon cables 51c - 82c from the opposite edges of the switch modules 21-24 along the outside edge of the processor stack A to the processors P1 through P8 on the outboard sides of the stack. These cables may be conductors on a printed circuit board. As noted, the circulation is all in one direction (clockwise in this case) with unidirectional path. The input is always at one edge of the module and output at the opposite edge, in this particular embodiment.

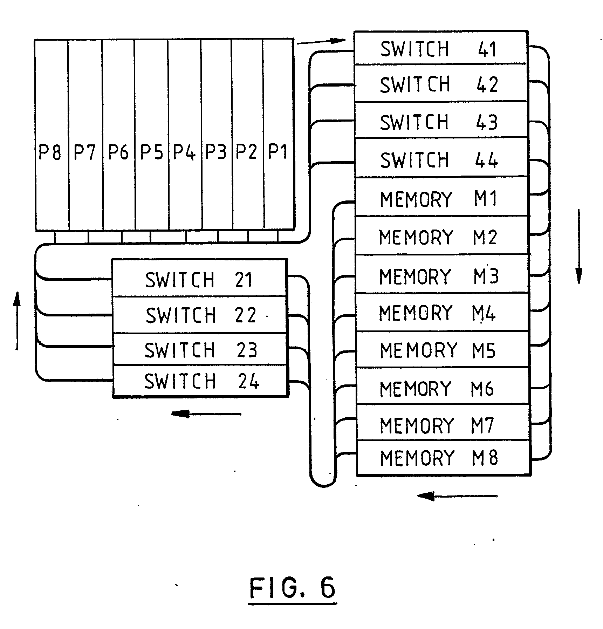

In an alternative embodiment shown in Figure 6, the inputs and outputs of the processors P1-P8 are at the same end of the module and, whilst not essential, the processor module stack is rotated through a right angle relative to the prior embodiment. It will be apparent that there are other patterns of layout that preserve the unidirectional path approach - for example, a right angle turn for each stack transition with the cable going regularly out and round to in or in and round to out - but these are not thought to be so acceptable for other reasons.

## Claims

1. A computer system including a plurality of processor modules (P1-P8), a plurality of memory modules (M1-M8), a request switch module (41.. or 44) and a response switch module (21.. or 24), the inputs to and outputs from the switch modules and the memory modules being of respective opposite sides of the modules, the processor modules being physically mounted as a stack with the inputs thereto being all on one side of the stack and the outputs therefrom being all on one side -same or opposite side of the stack, the memory module being physically mounted as a stack with the input thereto,being all on one side of the stack and the output therefrom all being on the opposite side of the stack, the stacks being mounted with a respective axis substantially parallel to form a notional rectangle with the switch modules mounted at a pair of diagonally opposite corners of that notional rectangle, coupling means being provided which includes interconnecting parallel bus lines (51-82, 51a-82a, 51b-82b, and 51c-82c respectively) connecting the outputs of the processor modules to the request switch module input, the output of the request switch module to the memory module inputs, the memory module outputs to the input to the response switch module and the output from the response switch module to the processor module inputs, so that the signal flow from any processor through the request switch module, any memory module and the response switch module, back to the processor is in the same sense - on a unidirectional clockwise or anti-clockwise path - relative to the notional rectangle.

2. A system as claimed in claim 1, wherein the inputs to and the outputs from the processor modules and on respective opposite sides thereof, the respective stack being mounted side by side, with the outputs of one stack facing the inputs to the other stack, the appropriate switch module being mounted on top of one stack and at the bottom of the other stack, whereby the signal flow through any processor, through the request switch module, any memory module and the response switch module, back to the processor is in the same sense -clockwise or anti-clockwise - relative to the notional rectangle.

3. A system as claimed in either preceding claim, wherein there are a respective plurality of each kind of switch module, each kind being mounted as a stack, substantially parallel to the at least one of the processor and memory module stacks.

4. A system as claimed in any preceding claim, wherein the or each request switch module comprises an mxn matrix of switches with arbitrator means responsive to data slices of a word with address bits indicative of the address of the memory and means responsive to the address bits for gating the data slice to the appropriate memory module.

5. A system as claimed in any preceding claim, wherein the bus lines include conductors carrying clocking signals whereby the clocking signals follow the unidirectional path through the memory modules and the switch modules.

6. A system as claimed in claim 5, wherein the clocking signals are synchronous with the data signals also on the bus lines

7. A system as claimed in claim 3 or any claim appendant thereto, wherein the means for coupling includes first plural conductor cables between the processors and the response switch modules at one edge of each thereof, second plural conductor cables connected between the opposite edges of the response switch modules and one edge of each of the memory modules, third plural conductor cables connected between the opposite edges of the memory modules and one edge of each of the second switch modules and fourth plural conductor cables connected between the opposite edges of the second switch modules and the processors.

8. A system as claimed in claim 7, wherein each processor module has its input at one edge and its output along the opposite edge and the output from the response switch modules is to the one edge and the output to the request switch modules is from the opposite edge, the plurality of processor modules being stacked at one end of the response switch modules stack, forming one composite stack therewith, and the plurality of memory modules is stacked below the first switch modules, forming a second composite stack therewith, adjacent and parallel to the first stack.

9. A system as claimed in claim 8, wherein the first cables extend substantially directly between the facing edges of the composite stacks, the second cables extend about the outer edge of the second composite stack, the third cables extend substantially directly between the facing edges of the composite stacks and the fourth cables extend along the outer edge of the first composite stack.

FIG. 1

FIG. 2

EP 0 335 482 A2

EP 0 335 482 A2

FIG. 3

ADDRESS
INPUT

ADDRESS    REDRIVE

DATA  IN

ECC
GEN

103

105

100

DATA SELECT

DATA SELECT

ECC
CHECK

DATA
OUT

BSM

FIG. 4

FIG. 5

FIG. 6